# EUROPEAN PATENT APPLICATION

(11) **EP 2 065 444 A1**
(43) Date of publication of application: **03.06.2009**
(21) Application number: 07807424.2
(22) Date of filing: 11.09.2007
(51) Int. Cl.: C08L 101/00

(54) **PHOTOPOLYMERIZABLE COMPOSITION**

(30) Priority: 14.09.2006 JP 2006248996
(71) Applicant: THREE BOND CO., LTD., Hachioji-shi Tokyo 193-0941 (JP)
(72) Inventor: KOJIMA, Kazuhiro, nes 95310 Saint Ouen L'Aumone; (FR); LAMY, Raphael, nes 95310 Saint Ouen L'Aumone; (FR)
(74) Representative: Hamer, Christopher K.
(86) International application number: PCT/JP2007/068020
(87) International publication number: WO 2008/032850

(57) **Abstract**

The present invention provides a photo-cationic polymerizable composition being photo-curable, especially being polymerized and cured upon being irradiated with visible light (380∼500 nm), superior in physical properties when cured and further superior in storage stability before being polymerized and cured.

A photo-cationic polymerizable composition comprising the following ingredients as essential ingredients: (A) 100 parts by weight of a cationic-polymerizable compound, (B) 0.01 to 10 parts by weight of an acid generator selected from the group consisting of aromatic iodonium salts and aromatic sulfonium salts, (C) 0.01 to 10 parts by weight of a benzoyl compound having a hydroxy group and (D) 0.01 to 10 parts by weight of a thioxanthone type radical generator.

## Description

### Field of Art

The present invention relates to a photo-cationic polymerizable composition adapted to be polymerized and cured upon being irradiated with an active energy ray such as ultraviolet light. More particularly, the present invention is concerned with a liquid photo-cationic polymerizable resin composition superior in photopolymerizability (photocurability) and in durability such as heat resistance and moisture resistance, also superior in the adhesion to various base materials, e.g., (engineering) plastics, metal, lumber, paper, glass and slate, and useful as a coating material for plastics, wood, pottery, glass and paper, aphotomoldingmaterial, a three-dimensional molding material, a printing plate material, a sealant or an adhesive for various optical elements, optical lenses, optical discs such as CD and DVD, and display elements such as a touch panel, liquid crystal, organic and inorganic ELs, and electronic paper, a sealant or an adhesive for various batteries, including dye sensitizing solar batteries, and further as a sealant or an adhesive for various base materials.

### Background Art

Photo-cationic polymerizable compositions adapted to start a cationic polymerization upon being irradiated with light are known to be advantageous in that they are not influenced by oxygen when curing unlike photo-radical polymerizable compositions, that they can be post-cured effectively by heating after irradiation of light, and that the polymerization of various kinds of monomers can be done. Crivello gives an outline of the photo-cationic polymerization (J.V. Crivello, "Advances in Polymer Science" Vol. 62, 1, 1984), but a photo-acid generator is usually employed as a polymerization initiator in the photo-cationic polymerization. As to the photo-acid generator, onium salts such as aromatic iodonium salts and sulfonium salts have been mainly used as industrial materials. Also as to sensitizers which promote the photo-cationic polymerization in combination with the above photo-acid generator, a large number of sensitizers have been reported correspondingly to the kind of initiators. For example, there are known such dyes as Acridine Orange, Acridine Yellow, benzoflavin, and cetoflavin T, aromatic compounds such as perylene, pyrene, anthracene, phenothiazine, 1,2-benzacetracene, and coronene, and aromatic carbonyl compounds such as thixanthone, fluorenone, benzophenone, and anthraquinone.

On the other hand, as to photo-radical polymerizable compositions, many of them are in practical use in the production of a sealant and an adhesive for optical parts such as housings (bases) of optical systems, including optical pickups, e.g., CD and DVD, copying machine and laser beam printer (LBP), which are called optoelectronics parts, photo-molding material, three-dimensional molding material, printing plate material, various optical elements, optical lenses, optical discs such as CD, DVD and blue ray disc, display elements such as organic and inorganic ELs, and electronic paper, and various batteries, including dye sensitizing solar batteries. With the recent rise of the needs for improvement of productivity (improvement of photocurability) and application to ultraviolet light impermeable members, resin compositions which can be cured not only with ultraviolet light but also with visible light have been being commercialized one after another.

Many of such visible light curable resin compositions contain acrylic monomers as main ingredients, and as to photopolymerization initiators (photo-radical polymerization initiators), they are not commercially available easily.

Epoxy resins as typical cationic polymerizable compounds are known to be basically high in durability, including heat resistance and moisture resistance, in comparison with acrylic resins. However, a comparison of the photocurability of epoxy resins with that of acrylic resins shows that the former is highly dependent on the atmospheric temperature. For example, at a low temperature of 15°C or lower, a long time is required for curing, or a certain epoxy material requires heating after irradiation of light. A resin composition capable of exhibiting a satisfactory curability under the irradiation of an active energy ray in the visible light region has not be proposed yet.

In JP 10-226658A, for solving the above-mentioned problems, there is disposed an acid generator wherein a salt of an aromatic iodonium or sulfonium is formed using imidoanion or methylidoanion. However, this acid generator is less nucleophilic than the commercially available antimony or phosphorus and hence the improvement of curability cannot be expected. Studies have also been being made about blending these epoxy cation polymerization systems with another curing (radical polymerization) system, e.g., (meth)acryl monomer to improve the performance. However, the use of another resin system may impair the performance inherent in epoxy.

In JP 10-279616A is disclosed a photopolymerizable composition which comprises a cationic polymerizable substance, a sulfonium salt and a photo-radical polymerization initiator containing thioxanthone. It is also disclosed therein that it is useful for the sulfonium salt to have a thioxanthone structure. However, in many cases, the sulfonium salt having a thioxanthone structure is low in solubility to epoxy resin. It is said that the sulfonium salt is originally less soluble in epoxy resin, but the addition of the thioxanthone structure results in further deterioration of the solubility. Besides, since the compound in question is bulky, it must be added in a large amount in order to attain a satisfactory curability, thus giving rise to the problem that physical properties of the resulting cured product are impaired.

In JP 2002-40632A is disclosed a hybrid composition using both a photo-cationic polymerizable resin and a photo-radical polymerizable resin, the composition comprising a compound having both oxetanyl group and epoxy group in the same molecule, a photo-cationic polymerization initator such as a sulfonium salt or an iodonium salt, a radical-polymerizable unsaturated compound, and a photo-radical polymerization initiator. Although a compound having both oxetanyl group and epoxy group in each molecule is proposed therein, it does not make any particularly contribution to the improvement of photo-curability.

As in JP 10-226658A, a system combined with a radical polymerization material system is also studied in JP 2002-40632A, but such a combined system is insufficient when viewed from the standpoint of deriving the performance of epoxy resin.

In JP 2001-520758A is disclosed a photo-curable composition comprising an epoxy resin, a hydroxyl-containing substance, and a photo-polymerization initiator system consisting of an iodonium salt, a visible light sensitizer such as camphor quinine, and an electron donating compound. In JP 2001-520759 is disclosed a photo-curable composition comprising the composition disclosed in the above JP 2001-520758A and a hydroxyl-containing substance further added thereto. However, according to the disclosure of the publication in question, in the hydroxyl-containing substance used therein there substantially is contained no such group as is likely to generate heat or photo-decomposition, and under the usual photo-curing conditions there occurs neither decomposition nor volatile components.

In JP 1995-118369A is disclosed a composition comprising an epoxy resin and propylene glycol. However, the propylene glycol does not exhibit a satisfactory curing promoting effect. Conversely, since it is used as an active basicity donator, it functions to delay or stop curing.

On the other hand, as noted above, there recently exists a growing demand for application of a photo-curable resin to an ultraviolet light impermeable material. In this connection, with the conventional photopolymerizable compositions referred to above, not only it is impossible to obtain a substantially satisfactory visible light curability (polymerizability), but also many of them are inferior in physical properties (e.g., adhesion, flexibility and sealability) after polymerization and curing).

### Disclosure of the Invention

### Object of the Invention

It is an object of the present invention to solve the above-mentioned problems of the prior art and provide a photo-cationic polymerizable composition being photo-curable, especially being polymerized and cured upon being irradiated with visible light (380∼500 nm), superior in physical properties when cured and further superior in storage stability before being polymerized and cured.

### Summary of the Invention

The present invention resides in a photo-cationic polymerizable composition comprising the following ingredients as essential ingredients:
(A) 100 parts by weight of a cationic-polymerizable compound,
(B) 0.01 to 10 parts by weight of at least one acid generator selected from the group consisting of aromatic iodonium salts and aromatic sulfonium salts,
(C) 0.01 to 10 parts by weight of at least one benzoyl compound represented by the following general formula (1): 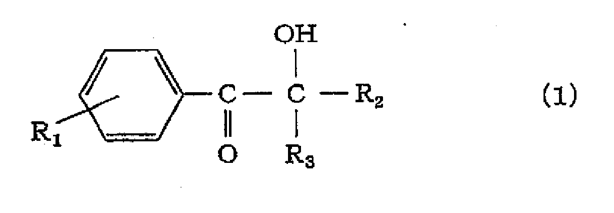 where R₁, R₂ and R₃ are each independently a hydrogen atom, an alkyl group, a hydroxyl group, or a hydroxyalkoxy group, provided R₂ and R₃ may conj jointly form an alicyclic hydrocarbon structure, and
(D) 0.01 to 10 parts by weight of a thioxanthone type radical generator.

### Effect of the Invention

The photo-cationic polymerizable composition of the present invention exhibits a remarkable improvement in photo-curability, especially in curing speed under visible light, and is useful as an adhesive, sealant or coating agent for materials which dislike overirradiation or irradiation itelf of ultraviolet light or for materials which transmit or absorb ultraviolet light. The photo-cationic polymerizable composition of the present invention permits design for the improvement of photo-curability, especially for the improvement of curing speed under visible light.

### Brief Description of the Drawing

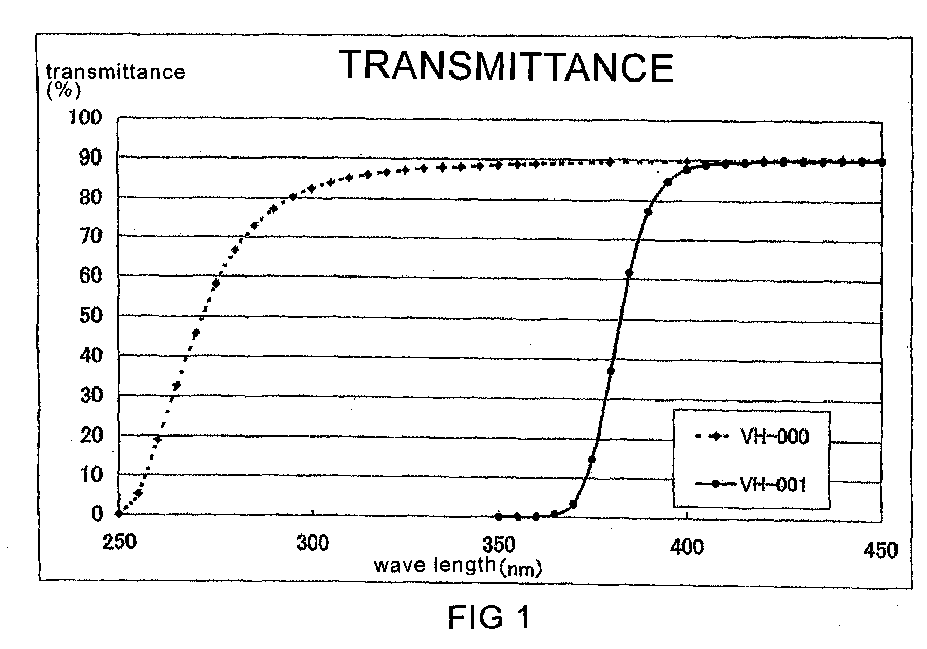

Fig. 1 is a graph showing an ultraviolet light cut-off ability of an acrylic plate not containing an ultraviolet light absorber and that of an acrylic plate containing an ultraviolet light absorber.

### Embodiments of the Invention

As examples of the cationic-polymerizable compound (A) used in the present invention there are mentioned such known cationic-polymerizable compounds as epoxy compounds (including epoxy resin as a typical example), oxetane compounds, vinyl ether compounds, cyclic sulfide compounds, cyclic amine compounds, and organosilicon cyclic compounds, with epoxy compounds and oxetane compounds being preferred.

Epoxy compounds are monomeric or polymeric compounds containing one or more epoxy groups in each molecule thereof. As examples thereof, mention may be made of monomers, oligomers and polymers each containing one or more glycidyl groups in each molecule. More concrete examples are epoxy resins such as bisphenol A, bisphenol F and alicyclic epoxy resins. In case of using a chloride ion-containing resin such as an epoxy resin prepared by using epichlorohydrin, it is preferable that the resin be purified by distillation before use. The lower the concentration of hydrolysable chloride ions, the more desirable.

Oxetane compounds are monomeric or polymeric compounds each containing one or more oxetane rings in each molecule thereof. As examples of compounds having one oxetane ring in each molecule thereof, mentionmaybemade of 3-ethyl-3-hydroxymethyloxetane, 3-(meth)acryloxymethyl-3- ethyloxetane, (3-ethyl-3-oxetanylmethoxy) methylbenzene, 4-fluoro-[1-(3-ethyl-3-oxetanylmethoxy)methyl] benzene, 4-methoxy-[1-(3-ethyl-3-oxetanylmethoxy)methyl] benzene, [1-(3-ethyl-3-oxetanylmethoxy)ethyl]phenyl ether, isobutoxymethyl (3-ethyl-3-oxetanylmethyl) ether, isobornyloxyethyl (3-ethyl-3-oxetanylmethyl) ether, isobornyl (3-ethyl-3-oxetanylmethyl)ether, 2-ethylhexyl (3-ethyl-3-oxetanylmethyl) ether, ethyldiethylene glycol (3-ethyl-3-oxetanylmethyl) ether, dichloropentadiene (3-ethyl-3-oxetanylmethyl) ether, dichloropentenyloxyethyl (3-ethyl-3-oxetanylmethyl) ether, dicyclopentenyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanylmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxcetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, and bornyl (3-ethyl-3-oxetanylmethyl) ether.

As examples of oxetane compounds having two or more oxetane rings in each molecule thereof, mention may be made of 3,7-bis(3-oxetanyl)-5-oxa-nonane, 3,3'-(1,3-(2-methylenyl) propanediyl bis(oxymethylene) bis-(3-ethyloxetane), 1,4-bis [(3-ethyl-3-oxetanylmethoxy)methyl] benzene, 1,2-bis[(3-ethyl-3-oxetanylmethoxy)methyl] ethane, 1,3-bis[(3-ethyl-3-Oxetanylmethoxy)methyl] propane, ethylene glycol bis(3-ethyl-3-oxetanylmethyl) ether, dicyclopentenyl bis(3-ethyl-3-oxetanylmethyl) ether, triethylene glycol bis(3-ethyl -3-oxetanylmethyl) ether, tetraethylene glycol bis(3-ethyl-3-oxetanylmethyl) ether, tricyclodecanediyldimethylene (3-ethyl-oxetanylmethyl) ether, trimethylolpropane tris(3-ethyl-3-oxetanylmethyl) ether, 1,4-bis(3-ethyl-3-oxetanylmethoxy) butane, 1,6-bis(3-ethyl-3-oxetanylmethoxy) hexane, pentaerythritol tris(3-ethyl-3-oxetanylmethyl)ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis(3-ethyl-3-oxetanylmethyl) ether, ditrimethylolpropane tetrakis(3-ethyl-3-oxetanylmethyl) ether, ethylene oxide (EO) -modified bisphenol A bis (3-ethyl-3-oxetanylmethyl) ether, propylene oxide (PO)-modifiedbisphenol A bis(3-ethyl-3-oxetanylmethyl) ether, EO-modified hydrogenated bisphenol A bis (3-ethyl-3-oxetanylmethyl) ether, PO-modified hydrogenated bisphenol A bis(3-ethyl-3-oxetanylmethyl) ether, and EO-modified bisphenol F (3-ethyl-3-oxetanylmethyl) ether.

The compounds exemplified above may each or in combination of two or more constitute the ingredient (A).

As the acid generator (B) used in the present invention, an aromatic iodonium salt or an aromatic sulfonium salt is selected from known acid generators. Particularly, an iodonium salt represented by the following general formula (5) is preferred. Of course, there may be used other photo-cationic polymerizable initiators each alone or in combination. 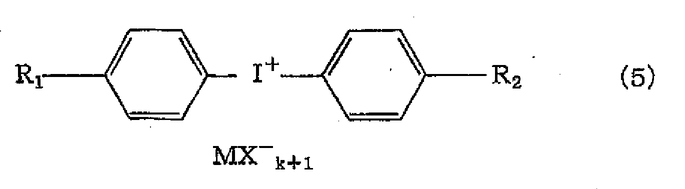 where R₁ and R₂ are each independently a hydrogen atom, an alkyl group (preferably one having 1 to 18 carbon atoms), or an alkoxy group (preferably one having 1 to 18 carbon atoms), M is metal (preferably phosphorus), X is a halogen atom (preferably a fluorine atom), and k is the valence of the metal.

As examples of the above iodonium-based photo-cationic polymerization initiator there are mentioned diphenyliodonium hexafluorophosphate, diphenyliodonium hexafluoroantimonate, diphenyliodonium tetrafloroborate, diphenyliodonium tetrakis (pentafluorophenyl)borate, bis(dodecylphenyl)iodonium hexafluorophosphate, bis(dodecylphenyl)iodonium hexafluoroantimonate, bis(dodecylphenyl)iodonium tetrafluoroborate, bis(dodecylphenyl)iodonium tetrakis (pentafluorophenyl)borate, 4-methylphenyl-4-(1-methylethyl) phenyliodonium hexafluorophosphate, 4-methlphenyl-4-(1-methylethyl)phenyliodonium hexafluoroantimonate, 4-methylphenyl-4-(1-mehylethyl)phenyliodonium tetrafluoroborate, 4-methylphenyl-4-(1-methylethyl) phenyliodonium tetrakis(pentafluorophenyl)borate, 4-methoxydiphenyliodonium hexafluorophosphate, bis(4-methylphenyl)iodonium hexafluorophosphate, bis(4-tert-butylphenyl)iodonium hexafluorophosphate, and bis(dodecylphenyl)iodonium tolylcumyliodonium hexafluorophosphate.

A preferred proportion of the iodonium-based photo-cationic polymerization initiator is not specially limited insofar as it is amount sufficient for the initiator to function as a photopolymerization initiator (catalyst) and imparts photo-curability to the composition. But a preferable range thereof is approximately 0.01 to 10.0 parts by weight, more preferably 0.1 to 5.0 parts by weight, based on 100 parts by weight as the total amount of the cationic-polymerizable compound (A). If the amount of the initiator in question is less than 0.01 parts by weight, the reaction will become extremely low and will not proceed to a satisfactory extent, and if it exceeds 10.0 parts by weight, it will be impossible to obtain the physical properties inherent in the resin and the performance will be deteriorated. Liquid storage property before curing may be deteriorated. This iodonium-based cationic-polymerization initiator is used on the basis of an appropriate design made in accordance with the type, blending ratio or use, of the cationic-polymerizable compound (A) combined therewith.

The benzoyl compound (C) used in the present invention is a hydroxyl group-containing benzoyl compound represented by the foregoing general formula (1). More particularly, it is any of hydroxyl group-containing benzoyl compounds having the following chemical structure (2) or (3): 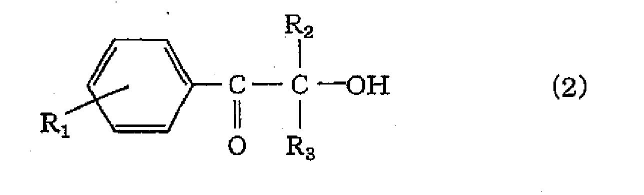 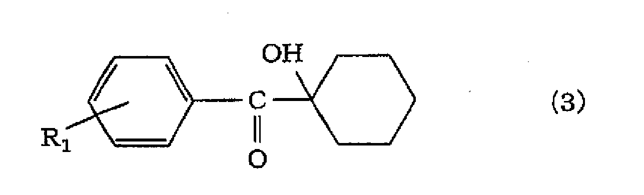 where R₁, R₂ and R₃ are each independently a hydrogen atom, an alkyl group (preferably one having 1 to 18 carbon atoms, more preferably 1 to 8 carbon atoms, such as methyl or ethyl), a hydroxyl group, or a hydroxyalkoxy group (preferably one having 1 to 18 carbon atoms, more preferably, 1 to 8 carbon atoms, such as hydroxyethoxy or hydroxyalkoxy).

As examples of compounds of the general formula (2) there are mentioned 2-hydroxy-2-methyl-1-phenylpropane-1-one, 2-hydroxyl-2-methyl-1-phenylbutane-1-one, 2-ethyl-2-hyrdroxy-1-phenylbutane-1-one, 1-(4-methylphenyl)-2-hydroxy-2-methylpropane-1-one, 1-(4-methylphenyl)-2-hydroxy-2-methylbutane-1-one, 1-(4-methylphenyl)-2-ethyl-2-hydroxybutane-1-one, 1-(4-ethylphenyl)-2-hydroxy-2-methylpropane-1-one, 1-(4-ethylphenyl)-2-hydroxy-2-methylbutane-1-one, 1-(4-ethylphenyl)-2-ethyl-2-hydroxybutane-1-one, 1-(4-propylphenyl)-2-hydroxy-2-methylpropane-1-one, 1-(4-propylphenyl)-2-hydroxy-2-methylbutane-1-one, 1-(4-propylphenyl)-2-ethyl-2-hydroxybutane-1-one, 1-(4-isopropylphenyl)-2-hydroxy-2-methylpropane-1-one, 1-(4-isopropylphenyl)-2-hydroxy-2-methylbutane-1-one, 1-(4-isopropylphenyl)-2-ethyl-hydroxybutane-1-one, 1[4-(2-hydroxyethoxy)-phenyl]-2-hydroxyl-2-methyl-1-propane-1-one, 2-hydroxy-1-{4-[4-(2-hydroxyl-2-methyl-propionyl)-benzyl]phenyl}-2-methylpropane-1-one, and α-hydroxyalkylphenone polymer. As is seen also from these examples, oligomers (dimer to decamer) of the compounds represented by the general formula (1) are also included in the ingredient (C) used in the present invention.

As examples of compounds of the general formula (3) there are mentioned 1-hydroxycyclohexyl-phenylmethanone, 1-hydroxycyclohexyl-4-methylphenylmethanone, 4-ethylphenyl-1-hydroxycyclohexylmethanone, and 1-hydroxycyclohexyl-4-isopropylphenylmethanone.

The hydroxyl group-containing benzoyl compound (C) is added as an assistant for assisting the operation of the acid generator (B) and a preferred amount thereof to be added is approximately in the range of 0. 01 to 10.0 parts by weight, more preferably 0.1 o 5.0 parts by weight, based on 100 parts by weight as the total amount of the photo-cationic polymerizable compound. If the amount of the hydroxyl group-containing benzoyl compound (C) is less than 0.01 part by weight, it is impossible to enhance the activity of the photopolymerization initiator (B) because of the too small amount, thus resulting in that the reaction becomes extremely slow or does not proceed to a satisfactory extent. Conversely, if the amount of the compound (C) exceeds 10.0 parts by weight, not only it will be impossible to obtain any useful effect as catalyst but also the performance of a cured product will be deteriorated or so will be the liquid storage property before curing. Like the onium-based photopolymerization initiator, the benzoyl compound in question is used on the basis of an appropriate design made in accordance with the type, blending ratio or use, of the cationic-polymerizable compound combined therewith.

The radical generator (D) used in the present invention is a thioxanthone type radical generator and a compound represented by the following general formula (4) is used preferably: 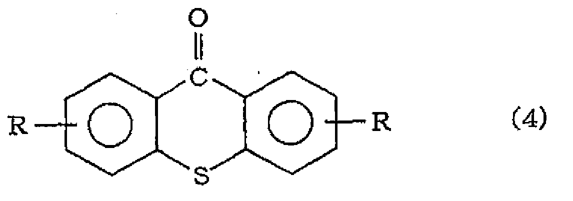 where Rs are each independently a hydrogen atom, a halogen atom, an alkyl group (preferably one having 1 to 18 carbon atoms, more preferably 1 to 8 carbon atoms, such as methyl or ethyl), a hydroxyl group or a hydroxyalkoxy group (preferably one having 1 to 18 carbon atoms, more preferably 1 to 8 carbon atoms, such as hydroxymethoxy or hydroxyethoxy).

As examples of the thioxanthone type radical generator there are mentioned 2-chlorothioxanthone, 2,4-diethylthioxantone, 2,4-diisopropylthioxanthone, and isopropylthioxanthone.

It is essential that the thioxanthone type radical generator (D) be used in combination with the ingredients (B) and (C), whereby it becomes possible to enhance the curing reactivity using visible light. The amount of the thioxanthone type radical generator (D) is preferably 0.01 to 10.0 parts by weight, more preferably 0.1 to 5.0 parts by weight, based on 100 parts by weight as the total amount of the photo-cationic polymerizable compound. If its amount of less than 0.01 part by weight, it will be impossible to enhance the activity of the acid generator (B) because of the too small amount, thus resulting in that the reaction becomes extremely slow or does not proceed o a satisfactory extent. Conversely, if its amount exceeds 10.0 parts by weight, not only it will be impossible to obtain any useful effect as catalyst but also the performance of a cured product will be deteriorated or so will be the liquid storage property before curing. The type and blending ratio of the ingredient (C) and of the ingredient (D) are appropriately designed on the basis of the use thereof.

The photopolymerizable composition of the present invention may contain additives in an appropriate amount not impairing the characteristics of the composition. Examples of such additives include colorants such as pigments and dyes, inorganic fillers such as calcium carbonate, talc, silica, alumina and aluminum hydroxide, electrically conductive particles such as silver, flame retardant, storage improvers such as boric acid ester, phosphoric acid ester, and inorganic and organic acids, organic fillers such as acrylic rubber and silicone rubber, polymers and thermoplastic elastomers such as polyimide resin, polyamide resin, general-purpose phenoxy resins such as bisphenol A type phenoxy resin, bisphenol F type phenoxy resin, and bisphenol A/bisphenol F copolymerized type phenoxy resin, polymethacrylate resins, polyacrylate resins, polyimide resins, polyurethane resins, polyester resins, polyvinylbutyral resin, SBS resin and epoxy resin-modified resin thereof, SEBS resin and modified resin thereof, plasticizer, organic solvent, antioxidant, defoaming agent, coupling agent, leveling agent, and rheology control agent. By using these additives it is possible to obtain a composition and a cured product thereof more excellent in resin strength, bonding strength, flame retardancy, thermal conductivity, storage stability and workability.

In the photopolymerizable composition of the present invention, the ingredient (A) is cationic-polymerized and cured by interaction and activation of the ingredients (B), (C) and (D) upon being irradiated with an active energy ray such as ultraviolet light. The active energy ray as referred to herein indicates, for example, electron beam, ultraviolet light, or visible light. The photoplymerizable composition of the present invention is characterized by being polymerized and cured effectively even upon irradiation of light (mainly visible light) having a wavelength of 380 to 500 nm.

For example, if only the light used ranges in wavelength from 380 to 500 nm, the photopolymerizable composition of the present invention can be polymerized and cured effectively by provided an integrated light quantity (dose) of at least 10 mJ/cm².

A heat-curing agent for heat-curing the cationic-polymerizable compound (A) may also be used in combination with the photopolymerizable composition of the present invention. By heating simultaneously with the irradiation of the active energy ray it is possible to obtain a cured product more efficiently, for example in a smaller dose of the active energy ray, or in a shorter time.

As examples of the heat-curing agent there are mentioned thermo-cationic polymerization initiators such as complexes of Lewis acids (e.g., boron trifluoride, titanium dichloride, titanium trichloride, ferrous chloride, ferric chloride, zinc chloride, zinc bromide, stannous chloride, stannic chloride, stannous bromide, stannic bromide, stannic dibutyl dichloride, stannic butyl dibromide, tetraethyltin, tetrabutyltin, triethylaluminum, diethylaluminum chloride, ethylaluminum dichloride) with electron donating compounds (e.g., N,N-dimethylformamide, N,N-dimethylacetamide, N-methylpyrrolidone, triamide hexamethylphosphate, dimethyl sulfoxide, trimethyl phosphate, triethyl phosphate); and compounds prepared by neutralizing protic acids (e.g., halogenocarboxylic acids, sulfonic cids, sulfuric acid monoesters, phosphoric acid monoesters, phosphoric acid diesters, polyphosphoric acid esters, boric acid monoesters, boric acid diesters) with bases (e. g., ammonia, monoethylamine, diethylamine, triethylamine, pyridine, piperidine, aniline, morpholine, cyclohexylamine, monoethanolamine, diethanolamine, triethanolamine, butylamine).

Also employable are heat latent curing agents such as aromatic amines, e.g., methaphenilenediamine, diaminodiphenylmethane and diaminophenylsulfone, dicyandiamide, imidazole derivatives typical of which are dicyandiamide, Curezol OR, Curezol CN and Curezol AZINE (products of Shikoku Chemicals Corp.), and organic acid dihyrazides.

In preparing the photo-cationic polymerizable compound of the present invention, the ingredients (B) to (D) are mixed and stirred in an arbitrary order into the cationic-polymerizable compound (A) in a light-shielded state to form a homogeneous solution. In the case where any of the ingredients is difficult to dissolve, heating may be performed to such an extent as does not impair the stability of the system.

### [Example 1]

The present invention will be described below in more detail by way of working examples and comparative examples, provided the present invention is not limited to the following examples.

### [Examples 1∼17, Comparative Examples 1∼10]

The environs of a preparation vessel were shielded against light and a photo-cationic polymerizable compound(s) (A), a photo-cationic polymerizable initiator (B), a hydroxyl group-containing benzoyl compound (C) and a thioxanthone type radical generator (D) were blended in predetermined amounts as shown in Tables 1 and 2, followed by mixing and stirring under heating to 50°C, to afford a desired photo-cationic polymerizable composition. In Comparative Examples, another polyhydric alcohol was used to make comparison with the hydroxyl group-containing benzoyl compound and show the difference between the two.

### [Testing Method]

### Photocurability Test

### (Surface Curability)

The photocurable composition prepared was applied onto a glass plate and was irradiated (integrated light quantity: about 1500 mJ/cm²) with ultraviolet light for 5 seconds using a commercially available ultraviolet light irradiator, immediately followed by checking surface tackiness with a finger. Evaluation was made in accordance with the following criterion:
⊚: tack-free, lubricative
○: tack-free
×: tacky

### (Deep Curability - 1)

The photocurable resin prepared was charged into a light-shielded plastic tube (inside diameter 5 mm, t 10 mm) and was irradiated with ultraviolet light (integrated light quantity: about 3000 mJ/cm²) for 10 seconds using the above ultraviolet light irradiator, immediately followed by measuring a deep curing distance.

As evaluation, a curing depth was measured in millimeter and was found correct to nearest tenth (two places of decimals).

### (Deep Curability - 2)

The photocurable resin prepared was charged into a light-shielded plastic tube (inside diameter 5 mm, t 10 mm) and was irradiated (integrated light quantity: about 3000 mJ/cm²) with ultraviolet light for 10 seconds in the same manner as above through an acrylic plate (ACRYPET VH-001, a product of Mitsubishi Rayon Co.) containing an ultraviolet light absorber, immediately followed by measuring a deep curing distance.

The results of the above tests are shown all together in Tables 1 and 2 (Examples) and Table 3 (Comparative Examples).

Ultraviolet light cut-off ability of the above ACRYPET VH-001 and that of an acrylic plate (ACRYPET VH-000, a product of Mitsubishi Rayon Co.) not containing an ultraviolet light absorber are shown in Fig. 1.

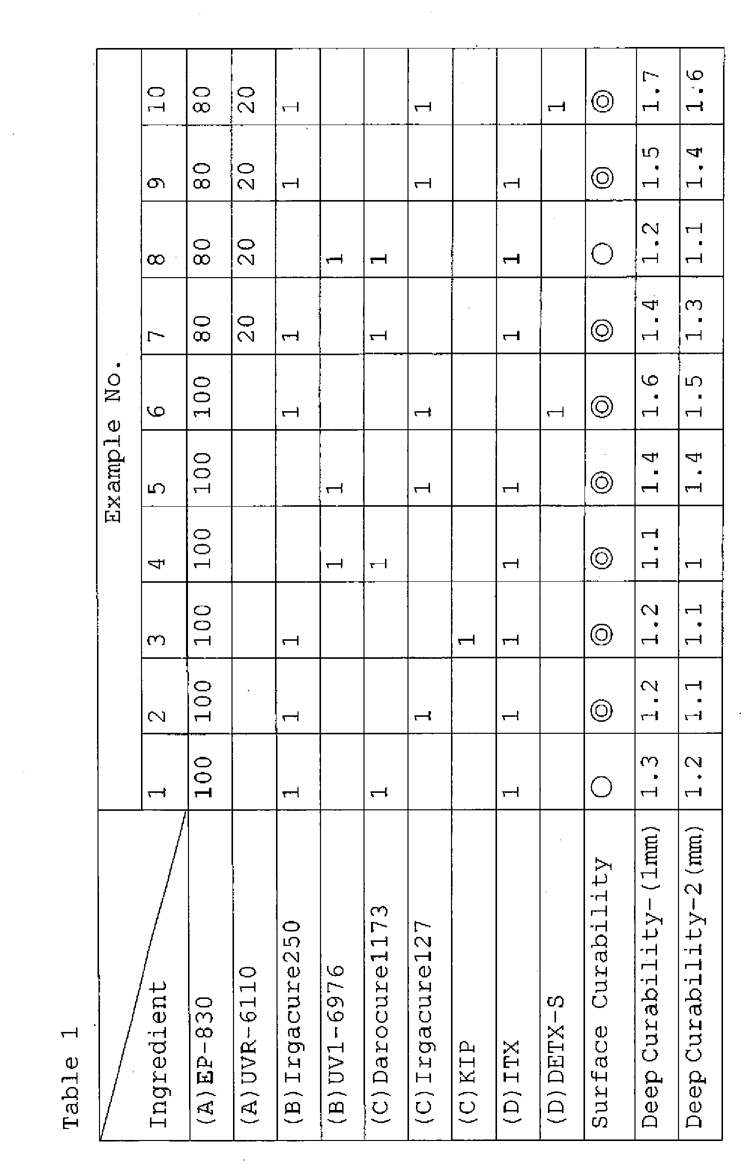

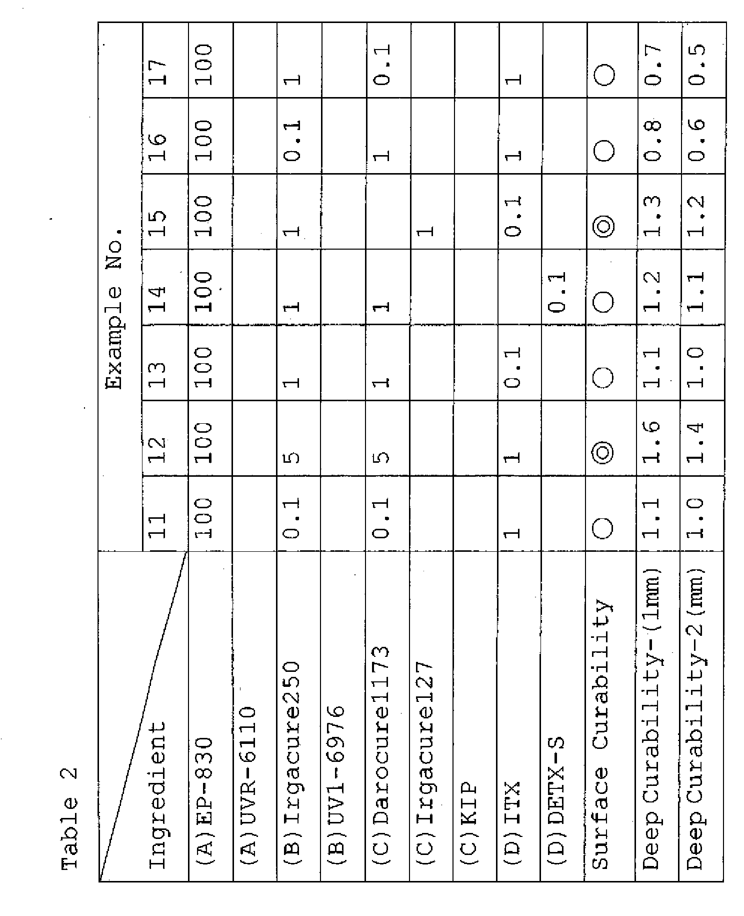

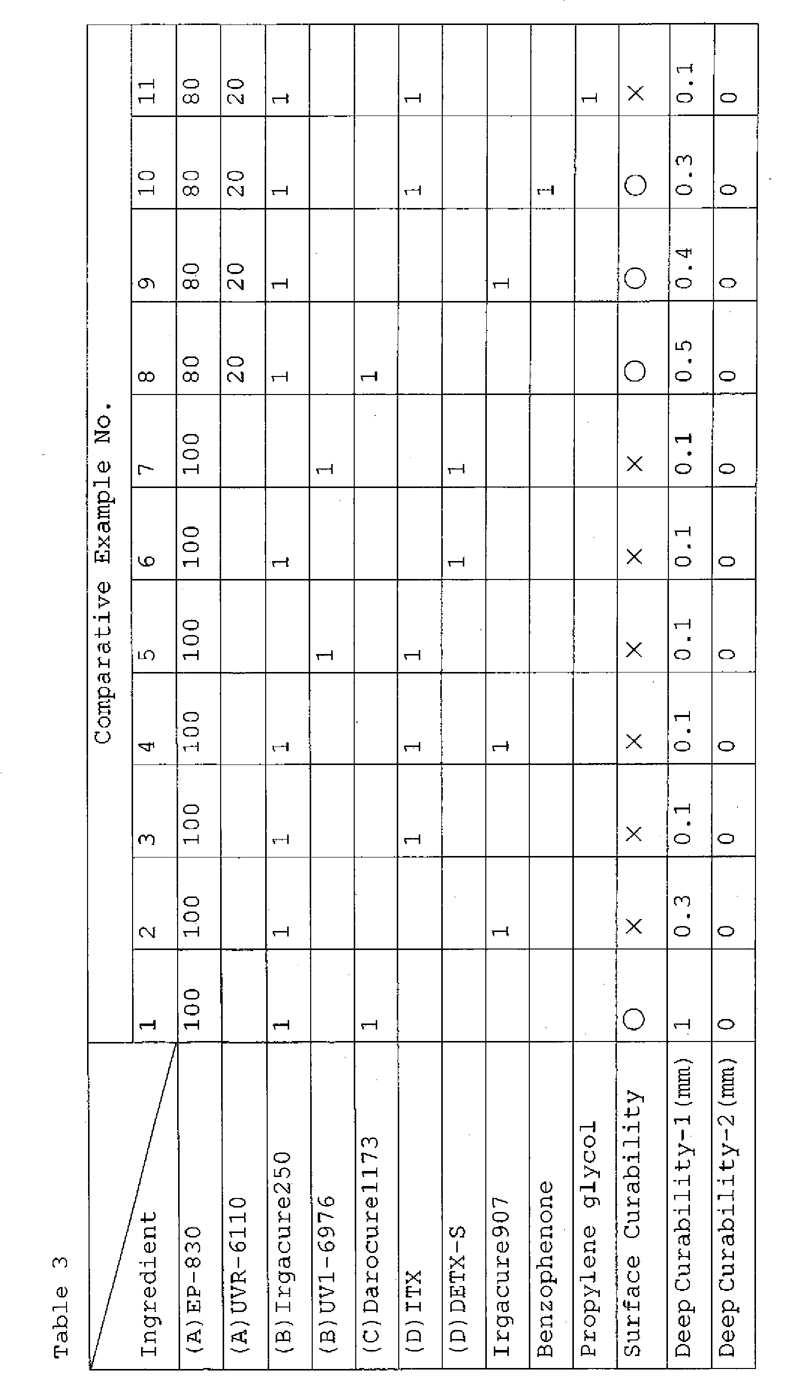

The symbols appearing in the above tables have the following meanings.

### <Epoxy Resin>

"EP-830": bisphenol A type epoxy resin (a product of Japan Epoxy Resin Co.)
"UVR6110": alicyclic epoxy resin (a product of Dow Chemical Co.)

### <Photo-Cationic Polymerization Initiator>

"Irgacure 250": iodonium (4-methylphenyl)[4-(2-methylpropyl)phenyl]-hexafluorophosphate (1-)
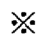 containing 25% propylene carbonate (a product of Ciba Speciality Chemicals Co.)
"UV1-6976": triallylsulfonium hexafluoroantimonate (a product of Dow Chemical Co.)
"Darocure 1173": 2-hydroxy-2-methyl-1-phenyl-propane-1-one (a product of Ciba Speciality Chemicals Co.)
"Irgacure 127": 2-hydroxy-1-{4-[4-(2-hydroxy-2-methyl -propionyl)-benzyl]phenyl}-2-methyl-propane-1-one (a product of Ciba Speciality Chemicals Co.)
"KIP": α-hydroxyalkylphenone polymer (a product of Nihon Siberhegner Co.)
"ITX": isopropylthioxanthone (a product of Shell Chemical Co.)
"DETX": 2,4-diethylthioxanthone (a product of Nippon Kayaku Co.)
"Irgacure 907": 2-methyl-1-(4-methylthiophenyl)-2-morpholinopropane-1-one (a product of Ciba Speciality Chemicals Co.)

From the results given in Tables 1 to 3 it is seen that the photo-cationic polymerizalbe compositions containing as essential ingredients the ingredients (A) to (D) defined in the present invention exhibit high photo(visible light)-curability also in connection with surface curability and deep curability.

### Industrially Applicable Field

The photo-cationic polymerizable composition of the present invention is a liquid photocurable resin composition superior in photocurability and durability, also superior in the adhesion to various base materials, e.g., (engineering) plastics, metal, lumber, paper, glass and slate, and useful as a coating material for plastics, wood, pottery, glass and paper, a photomolding material, a three-dimensional molding material, a printing plate material, a sealant or an adhesive for various optical elements, optical lenses, optical discs such as CD and DVD, and display elements such as a touch panel, liquid crystal, organic and inorganic ELs, and electronic paper, a sealant or an adhesive for various batteries, including dye sensitizing solar batteries, and further as a sealant or an adhesive for various base materials. It is useful inmolding housings (bases) of optical systems, including optical pickups, e. g., CD and DVD, copying machine and laser beam printer (LBP), which are called optoelectronic parts, and is also useful in adhesive-sealing those parts.

## Claims

1. A photo-cationic polymerizable composition comprising the following ingredients as essential ingredients:
(A) 100 parts by weight of at least one cat ionic-polymerizable compound,
(B) 0.01 to 10 parts by weight of at least one acid generator selected from the group consisting of aromatic iodonium salts and aromatic sulfonium salts,
(C) 0.01 to 10 parts by weight of at least one benzoyl compound represented by the following general formula (1): 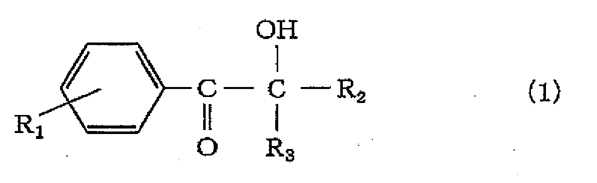 where R₁, R₂ and R₃ are each independently a hydrogen atom, an alkyl group, a hydroxyl group, or a hydroxyalkoxy group, provided R₂ and R₃ may conjointly form an alicyclic hydrocarbon structure, and
(D) 0.01 to 10 parts by weight of at least one thioxanthone type radical generator.

2. A photo-cationic polymerizable composition according to claim 1, wherein the cationic-polymerizable compound is selected from epoxy compounds and oxetane compounds.

3. A photo-cationic polymerizable composition according to claim 1 or claim 2, wherein the thioxanthone type radical generator is a compound represented by the following general formula (4): 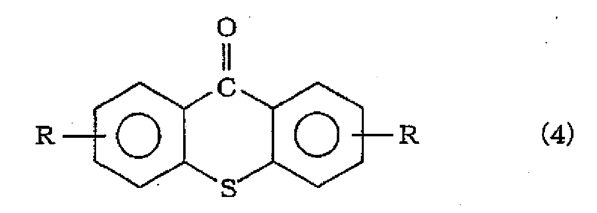 where Rs are each independently a hydrogen atom, a halogen atom, an alkyl group, a hydroxyl group, an alkoxy group, or a hydroxyalkoxy group.

4. A photo-cationic polymerizable composition according to any of claims 1 to 3, which is polymerized upon being irradiated with light including at least a wavelength of 380 to 500 nm.

5. A photo-cationic polymerizable composition according to any of claims 1 to 4, wherein the acid generator is an idonium salt represented by the following general formula (5): 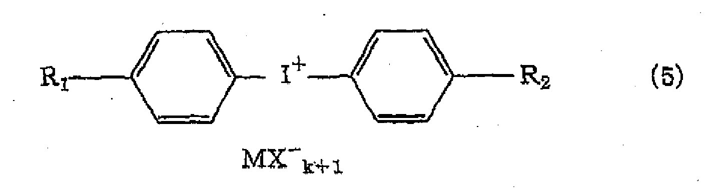 where R₁ and R₂ are each independently a hydrogen atom, an alkyl group, or an alkoxy group, M is metal, X is a halogen atom, and k is the valence of the metal.

6. A photo-cationic polymerizable composition according to any of claims 1 to 5, wherein the cationic-polymerizable compound is an epoxy resin.

7. A photo-cationic polymerizable composition according to any of claims 1 to 6, wherein the benzoyl compound is a compound represented by the following general formula (2): 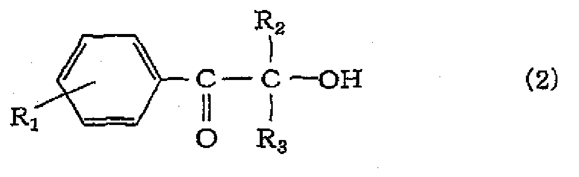 where R₁, R₂ and R₃ are each independently a hydrogen atom, an alkyl group having 1 to 18 carbon atoms, a hydroxyl group, or a hydroxyalkoxy group having 1 to 18 carbon atoms.

8. A photo-cationic polymerizable composition according to any of claims 1 to 6, wherein the benzoyl compound is a compound represented by the following general formula (3): 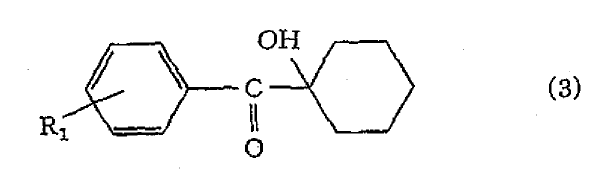 where R₁ is a hydrogen atom, an alkyl group having 1 to 18 carbon atoms, a hydroxyl group, or a hydroxyalkoxy group having 1 to 18 carbon atoms.
